# EUROPEAN PATENT APPLICATION

(11) **EP 0 643 247 A1**
(43) Date of publication of application: **15.03.1995**
(21) Application number: 94830424.1
(22) Date of filing: 12.09.1994
(51) Int. Cl.: F16L 3/10

(54) **Releasable pipe-clamping collar**

(30) Priority: 14.09.1993 IT MI931977
(71) Applicant: RACCORDERIE METALLICHE S.p.A., Levata di Curtatone (Mantova) (IT)
(72) Inventor: Miozzo, Luigi, Cappelletta Di Virgilio, Mantova (IT)
(74) Representative: Adorno, Silvano

(57) **Abstract**

There is described a pipe-clamping collar of the releasable type consisting in a known way of two opposing half-collars whose flat ends are provided with holes through which pass two clamp screws, but improved by the arrangement that one of the two half-collars (1) has one of the two holes (10) laterally open outwards and the clamp screw (4) passing through said hole has a narrowing (11) at the terminal zone of the threaded shank thereof (12), whereby the diameter of the shank in said narrowing (11) is so reduced to allow the lateral inclination of the screw (4) and its coming out of the laterally open hole (10) of the half-collar (1).

## Description

The present invention relates to a pipe-clamping collar, and in particular to a collar wherein one of the two half-collars composing it can be released from the other without completely unscrewing either clamp screw.

As known, the pipe-clamping collars essentially consist of two opposing half-collars connected by two clamp screws. Each half-collar consists of a metal clip arched in the middle and having both flat ends provided with a threaded hole through which passes each of the two clamp screws. The pipe is clamped by placing it between said half-collars and then by tightly screwing the clamp screws. In order to place the pipe between said half-collars, it is necessary to completely unscrew at least one of the two clamp screws so as to allow the rotation of a half-collar with respect to the other to let the pipe pass through. However, the complete unscrewing of one of the two screws involves the risk that such a screw falls and gets even lost during the installation.

In order to eliminate such drawback there has already been proposed a type of collar wherein at least a threaded hole of one of the two half-collars is turned into a transversal slit which allows the head of the clamp screw to pass through and therefore the half-collar to be released. However, such a solution is not free from drawbacks because the transversal slit does not allow the use of narrow metal clips; in fact, the clip has to be wide enough to make the transversal slit thereon. Another type of known releasable collar allows the use of narrow clips because of the axial slit, but even this solution is not free from drawbacks because it involves, since all the holes are not threaded, the use of additional parts for the threadings with a resulting increase of material and manufacturing costs.

Object of the present invention is to provide a pipe-clamping collar free from the above mentioned drawbacks of the so far known collars. Such object is attained by means of a collar wherein one of the two half-collars has one of the two holes laterally open outwards and wherein the screw passing through the said hole has, close to its end opposite to the head, a narrowing or diameter reduction apt to allow a lateral inclination of the screw enough to let it come out of the said laterally open hole and to consequently release the relating half-collar.

The features and the advantages of the collar according to the present invention will appear evident to those skilled in the art from the following detailed description of an embodiment thereof with reference to the attached drawings wherein:
Fig. 1 shows a side view of the collar clamped around a pipe;
Fig. 2 shows the same collar during the release operation;
Fig. 3 shows a top view of the upper half-collar; and
Fig. 4 shows an enlarged side view of the clamp screw with the narrowing according to the present invention.

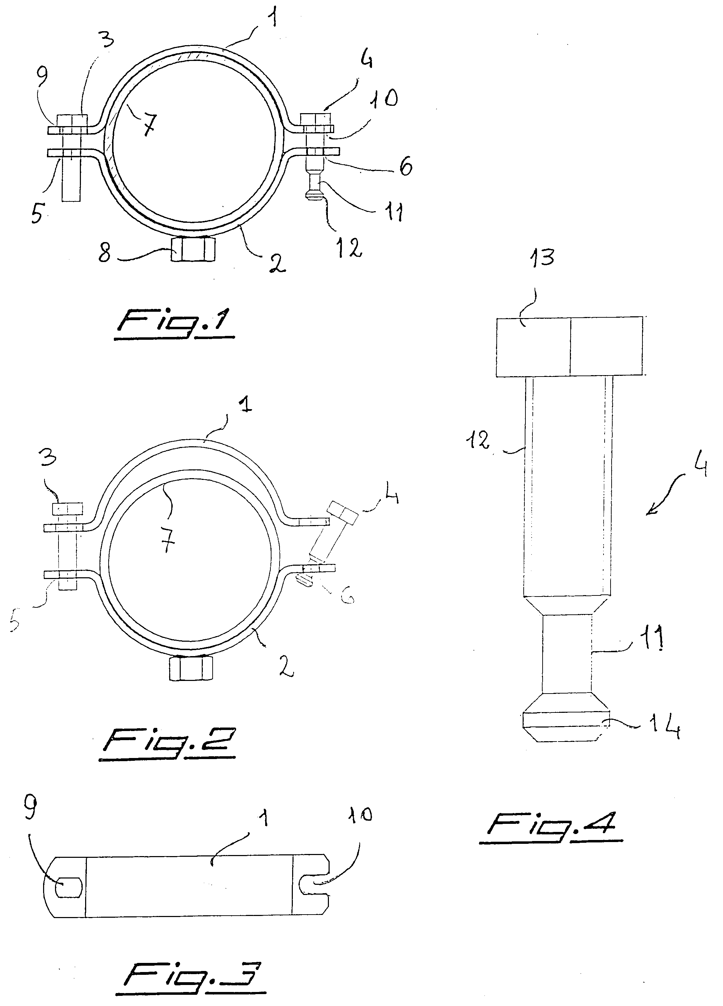

Referring to Fig. 1, the pipe-clamping collar according to the present invention consists, as the collars of the prior art, of two half-collars 1 and 2 kept together by two clamp screws 3 and 4 that are respectively screwed in threaded holes 5 and 6 for clamping a pipe 7 interposed between the two half-collars. The collar is preferably provided with an internally threaded appendix 8 apt to secure it to the wall along which the pipeline runs.

Both half-collars 1 and 2 consist, according to the prior art, of a metal clip having the middle portion bent as an arc of circle with perforated terminal flat portions. Holes 5 and 6 of half-collar 2 are threaded, as already mentioned above, while the corresponding holes 9 and 10 of the half-collar 1 are not threaded.

According to one of the features of the present invention, hole 10 is laterally open outwards as it appears evident from Fig. 3.

According to another feature of the present invention, one of the two clamp screws 3 and 4, and precisely screw 4 which is positioned to coincide with laterally open hole 10, has a narrowing 11 which breaks the threading close to the terminal portion of shank 12. Such narrowing 11, obtained by reducing the diameter of screw 4, serves to create a clearance between the screw and threaded hole 6 when the narrowing, while unscrewing screw 4, is in correspondence with the said threaded hole. Thanks to such a clearance, screw 4 can be laterally tilted so that it comes out of the laterally open hole 10 allowing therefore the release of half-collar 1 and the rotation thereof in order to make free the passage of pipe 7.

In Fig. 2 there is illustrated in detail the release of half-collar 1 to let the pipe 7 come out of the collar. In order to obtain such a release, both screws 3 and 4 have been unscrewed until most of the shank thereof has passed through threaded holes 5 and 6 as it is just illustrated in Fig. 2. In such a position the narrowing 11 of screw 4 has come to coincide with threaded hole 6 and, thanks to the clearance due to the said narrowing, screw 4 can be laterally tilted as illustrated in the figure. The half-collar 1, is no more retained by screw 4 which by laterally tilting came out of laterally open hole 10, so that it can be rotated to completely make free the passage of pipe 7.

As it can be seen in Fig. 3, hole 10 is laterally open outwards so as to allow the upper portion of screw 4 to come out thereof. At the opposite end of half-collar 1 there is hole 9 which, as mentioned above, is not threaded and has been turned into an axial slit which makes much easier the release operations of half-collar 1.

In Fig. 4, which shows an enlarged view of screw 4, said screw clearly comprises in a known way a threaded shank 12 and a head 13. Unlike the known screws, screw 4 has, close to the terminal portion of shank 12, the narrowing 11 whose function has been described above.

The depth and the height of narrowing 11 may be obviously chosen at will according to the dimensions of screw 4 and of the other elements which form the collar. The terminal portion 14 of shank 12, placed below narrowing 11, prevents the screw 4 to be accidentally unscrewed in a complete way from the seating thereof with the resulting risk of loosing it.

The head 13 of screw 4 may freely have a polygonal form, in order to be screwed with a wrench, or a slot, in order to be screwed with a screwdriver. The half-collars 1 and 2 are preferably made of metal, but they can be made of any other suitable material.

## Claims

1. Pipe-clamping collar consisting of two opposing arched half-collars (1,2) whose flat ends are provided with holes through which pass two clamp screws, characterised in that one of the two arched half-collars (1) has one of the two holes (10) laterally open outwards and the clamp screw (4) passing through said hole has a narrowing (11) at the terminal zone of the threaded shank thereof (12), whereby the diameter of narrowing (11) is so reduced to allow the lateral inclination of screw (4) and its coming out of the laterally open hole (10) of the arched half-collar(1).

2. Collar according to claim 1, characterised in that the other hole (9) of the arched half-collar (1) is shaped in the form of an axial slit.
